# EUROPÄISCHE PATENTSCHRIFT

(11) **EP 1 285 636 B1**
(45) Veröffentlichungstag und Bekanntmachung des Hinweises auf die Patenterteilung: **03.01.2007**
(21) Anmeldenummer: 02015401.9
(22) Anmeldetag: 11.07.2002
(51) Int. Cl.: A61C 17/06, B04B 1/02, B01D 21/24, B01D 19/00, B04B 5/10, B01D 21/26

(54) **Abscheidegerät**
Separator apparatus
Appareil séparateur

(30) Priorität: 15.08.2001 DE 10139025
(43) Veröffentlichungstag der Anmeldung: 26.02.2003
(73) Patentinhaber: Dürr Dental GmbH & Co. KG, 74321 Bietigheim-Bissingen (DE)
(72) Erfinder: Nafzger, Siegfried, 71711 Steinheim (DE); Nonnenmacher, Eberhard, 74379 Ingersheim (DE); Klaffki, Kirsten, 74243 Langenbrettach (DE)
(74) Vertreter: Ostertag, Reinhard

(56) Entgegenhaltungen:
- EP-A- 0 726 744
- DE-A- 3 521 929

## Beschreibung

Die Erfindung betrifft ein Baukastensystem für ein Abscheidegerät.

Abscheidegeräte, insbesondere zum Aufbereiten von Abwässern, welche in zahnärztlichen Praxen anfallen, sind in unterschiedlicher Form bekannt.

Zum einen in Form von reinen Festkörper-Abscheidern, die insbesondere zum Abscheiden feiner Amalgampartikel aus dem Abwasser dienen. Ein entsprechender Abscheider kann z.B. der DE 30 30 614 A1 entnommen werden. Ein solcher Festkörper-Abscheider umfaßt eine durch einen Antriebsmotor angetriebene Zentrifugentrommel, welche Feststoffpartikel aus dem dentalen Abwasser abscheidet.

Es sind ferner motorisch angetriebene Flüssigkeitsabscheider für dentale Zwecke bekannt (EP 0 726 744 A1), welche aus dem aus dem Mund eines Patienten abgesaugten Flüssigkeits/Luft-Gemisch die flüssigen Anteile abtrennen und so gewährleisten, daß die zum Absaugen des Gemisches verwendete Saugmaschine keine Flüssigkeitsanteile erhält, welche zu Korrosion und Betriebsstörungen führen würden.

Schließlich sind auch kombinierte Abscheidegeräte bekannt, welche sowohl flüssige Anteile als auch feste Anteile aus dem an einem zahnärztlichen Arbeitsplatz anfallenden Gemisch aus Luft/Flüssigkeit/Feststoffpartikeln zurückhalten. Derartige kombinierte Abscheidegeräte können zum Beispiel den in der DE 35 21 929 A1 beschriebenen Aufbau haben.

Bei den verschiedenen Typen von Abscheidegeräten handelt es sich bisher um getrennte Produktlinien mit ganz unterschiedlichen Bauteilen.

Durch die vorliegende Erfindung soll ein Aufbau eines Baukastensystems angegeben werden, das das Zusammenstellen von Abscheidegeräten, die nur Flüssigkeit, nur Feststoffpartikel oder Flüssigkeit und Feststoffpartikel abscheiden können, unter weitestgehender Verwendung gleicher Bauteile ermöglicht.

Diese Aufgabe ist erfindungsgemäß gelöst durch ein Baukastensystem mit den im Anspruch 1 bzw. im Anspruch 2 angegebenen Merkmalen.

Bei dem erfindungsgemäßen Baukastensystem hat man gleiche oder zumindest ähnliche Stoßflächen zwischen einer Tragplatte, auf welcher auch der Antriebsmotor angeordnet ist, und einer Luft-Abscheideeinheit bzw. einer Festkörper-Abscheideeinheit. Diese Einheiten können somit wahlweise an der Tragplatte angebracht werden.

Die Erfindung bringt eine erhebliche Kostenersparnis bei der Herstellung, da man für die unterschiedlichen Produktlinien die gemeinsamen Bauteile in größeren Stückzahlen herstellen kann.

Eine weitere erhebliche Kostenersparnis ergibt sich dadurch, daß die verschiedenen Gehäuseteile der Abscheideeinheiten in der Praxis Spritzteile aus Kunststoff sind. Da man nun weniger unterschiedliche Bauteile benötigt, werden auch erhebliche Einsparungen in den teueren Spritzformen erzielt.

Schließlich ist der Hersteller in der Fertigungsplanung flexibler, da er die gleichen Bauteile wahlweise für jede der Produktlinien verwenden kann.

Schließlich ist es noch am Einsatzort möglich, ein Abscheidegerät, welches bisher nur zur Flüssigkeitsabscheidung diente, in kurzer Zeit und mit geringen zusätzlichen Kosten zu einem Gerät aufzurüsten, welches zusätzlich auch eine Feststoffabscheidung bewerkstelligt. Gleiches gilt für ein Gerät, welches bisher nur zur Feststoffabscheidung diente und nun zusätzlich die Funktion der Flüssigkeitsabscheidung übernehmen soll.

Vorteilhafte Weiterbildungen der Erfindung sind in Unteransprüchen angegeben.

Mit der Weiterbildung der Erfindung gemäß Anspruch 3 wird erreicht, daß ein Baukastensystem sowohl eine Flüssigkeits-Abscheideeinheit als auch eine Festkörper-Abscheideeinheit umfassen kann. Dadurch, daß man die beiden Abscheideeinheiten in der angegebenen Weise axial hintereinandersetzt, hat das gesamte Baukastensystem kleine radiale Abmessung.

Ein Adapterteil, wie es im Anspruch 4 angegeben ist, hat mechanisch besonders einfachen Aufbau.

Bei einem Baukastensystem gemäß Anspruch 5 kann man die Durchmesser der Gehäuse von Flüssigkeits-Abscheideeinheit und Festkörper-Abscheideeinheit so wählen, wie dies für jeweiligen Abscheidezwecke am günstigsten ist.

Die Weiterbildung der Erfindung gemäß Anspruch 6 erlaubt ein einfaches Zusammenbauen der Untereinheiten des Gerätes und stellt eine gute Abdichtung zwischen den verschiedenen Untereinheiten sicher.

Anspruch 7 gibt ein besonderes Bodenteil an, welches dann verwendet wird, wenn das Gerät ausschließlich eine Luft-Abscheideeinheit aufweist. Dieses Nicht-Standardteil hat einfache Geometrie. Man kann es auch durch Abwandlung eines Spritzwerkzeuges für ein solches Bodenteil erhalten, welches bei einer Luft-Abscheideeinheit verwendet wird, die zusammen mit einer Festkörper-Abscheideeinheit verwendet wird und eine mittige Wellen-Druchgangsöffnung aufweist.

Bei einem Baukastensystem gemäß Anspruch 8 kann man durch einfache Steckverbindung von Teilwellen den Antrieb der Rotoren von Flüssigkeits-Abscheideinheit und Festkörper-Abscheideeinheit erhalten. Die Antriebswelle hat somit ähnlich modularen Aufbau wie die Gehäuse der Abscheideeinheiten.

Die Weiterbildung der Erfindung gemäß Anspruch 9 ermöglicht dabei das axialer Hintereinandersetzen von Flüssigkeits-Abscheideeinheit und Festkörper-Abscheideeinheit unter Verwendung von diesen zugeordneten Wellenstücken.

Die Weiterbildung der Erfindung gemäß Anspruch 10 ist im Hinblick auf ein einfaches Verspannen der Rotor-Antriebswellen mit der Motorwelle von Vorteil.

Die weiterbildung der Erfindung gemäß Anspruch 11 ist zum einen im Hinblick auf gute Drehmomentübertragung zwischen Antriebswelle und Rotor von Vorteil. Darüber hinaus ist auch die Handhabung und Montage der durch Rotor und Antriebswelle gebildeten Untereinheiten vereinfacht.

Die Weiterbildung der Erfindung gemäß Anspruch 12 sorgt dafür, daß man dann, wenn man nur eine Flüssigkeits-Abscheideeinheit verwendet, am Ende der Antriebswelle die gleichen geometrischen Verhältnisse hat, wie dann, wenn die Antriebswelle der Flüssigkeitsabscheideeinheit mit der Antriebswelle einer Festkörper-Abscheideeinheit verbunden ist.

Nachstehend wird die Erfindung anhand von Ausführungsbeispielen unter Bezugnahme auf die Zeichnung näher erläutert. In dieser zeigen:
- Figur 1:: einen axialen Schnitt durch ein Kombi-Abscheidegerät, welches sowohl eine Flüssigkeits-Abscheideeinheit als auch eine Festkörper-Abscheideeinheit umfaßt;
- Figur 2:: eine seitliche Ansicht einer segementierten Antriebswelle für Rotoren der beiden Abscheideeinheiten des Kombi-Abscheidegerätes;
- Figur 3:: eine transversale Schnittdarstellung des Kombiabscheidegerätes von Figur 1 längs der dortigen Schnittlinie III-III;
- Figur 4:: eine seitliche Ansicht des Kombi-Abscheidegerätes gesehen in Richtung des Pfeiles IV von Figur 3;
- Figur 5:: eine seitliche Ansicht des Kombi-Abscheidegerätes nach Figur 1 gesehen in Richtung des Pfeiles V von Figur 3;
- Figur 6:: eine seitliche Ansicht des Kombigerätes nach Figur 1 gesehen in Richtung des Pfeiles VI von Figur 3;
- Figur 7:: eine axiale Aufsicht auf das Kombi-Abscheidegerät von Figur 1;
- Figur 8:: eine vergrößerte Schnittdarstellung eines Auslaßabschnittes der Flüssigkeits-Abscheideeinheit des Kombi-Abscheidegerätes nach den Figuren 1 bis 7 und eines T-Stückes, über welches die von der Flüssigkeits-Abscheideeinheit abgegebene Flüssigkeit und von einem Speibecken her zugeführte Flüssigkeit zusammengefaßt und der Festkörper-Abscheideeinheit zugeführt werden;
- Figur 9:: eine seitliche Ansicht eines Ventil-Stellhebels einer Entlüftungeinrichtung der FestkörperAbscheideeinheit;
- Figur 10:: eine vergrößerte Ansicht einer Entlüftungseinrichtung für die Festkörper-Abscheideeinheit des Kombiabscheidegerätes;
- Figur 11:: eine ähnliche Ansicht wie Figur 1, in welcher jedoch ein Abscheidegerät gezeigt ist, welches nur eine Festkörper-Abscheideinheit umfaßt; und
- Figur 12:: eine ähnliche Ansicht wie Figur 1, in welcher jedoch ein Abscheidegerät gezeigt ist, welches nur eine Flüssigkeits-Abscheideeinheit umfaßt.

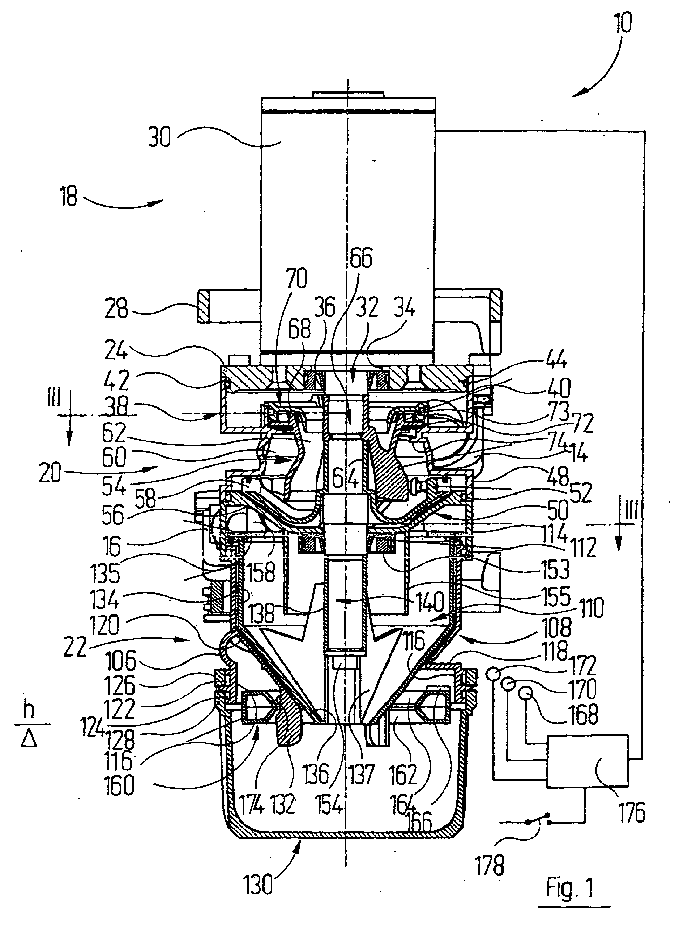

In Figur 1 ist mit 10 insgesamt ein Kombi-Abscheidegerät bezeichnet, welches einen Einlaßstutzen 12 aufweist, der unter Betriebsbedingungen mit der Saugablage eines dentalen Arbeitsplatzes verbunden ist und dort mit einer Saugkanüle verbunden ist, über welche ein Gemisch aus Luft, Flüssigkeit und beim Bohren entstehenden feinen Feststoffpartikeln, insbesondere Amalgampartikeln, aus dem Mund eines Patienten abgesaugt wird. Zur Erzeugung dieses Luftstromes ist ein Auslaßstutzen 14 des KombiAbscheidegerätes unter Einsatzbedingungen mit einer in der Zeichnung nicht wiedergegebenen Saugmaschine verbunden, die z.B. eine Seitenkanalmaschine sein kann.

Die am Auslaßstutzen 14 abgegebene Luft ist von Flüssigkeitsanteilen befreit, und ähnlich sind flüssige Anteile, die an einem weiteren Auslaßstutzen 16 des Kombi-Abscheidegerätes 10 abgegeben werden, von festen Anteilen befreit.

Um dieses Zurückhalten von flüssigen und festen Bestandteilen bewerkstelligen zu können, umfaßt das Kombi-Abscheidegerät 10 neben einer insgesamt mit 18 bezeichneten Antriebseinheit eine insgesamt mit 20 bezeichnete Flüssigkeits-Abscheideeinheit, und eine insgesamt mit 22 bezeichnete Festkörper-Abscheideeinheit.

Die Antriebseinheit 18 umfaßt eine Tragplatte 24, welche über eingeknöpfte doppelkegelige Schwingungsdämpfer 26 aus elastomerem Material an einer Montageplatte 28 angebracht ist, die ihrerseits mit einem in der Zeichnung nicht wiedergegebenen Geräterahmen verbunden ist, der mit einem tragenden Teil des dentalen Arbeitsplatzes verbunden ist oder auf dem Boden des Praxisraumes aufgestellt ist.

Die Tragplatte 24 trägt auf der Oberseite einen elektrischen Antriebsmotor 30 mit einer nach unten überstehenden Motorwelle 32. Letztere erstreckt sich durch eine mittige Öffnung 34 der Tragplatte 24 und ist gegen diese durch eine Lippendichtung 36 abgedichtet.

Die Flüssigkeits-Abscheideeinheit 20 hat ein Gehäuseteil 38, welches mit einem oberen zylindrischen Abschnitt 40 in eine Randschulter 42 der Tragplatte 24 eingepaßt ist und gegen die Tragplatte durch einen O-Ring 44 abgedichtet ist.

Der obere Gehäuseabschnitt 40 steht mit dem Auslaßstutzen 14 in Verbindung.

Ein untere ebenfalls zylindrischer Gehäuseabschnitt 48 des Gehäuseteiles 38 nimmt ein Bodenteil 50 auf und ist gegen dieses durch einen O-Ring 52 abgedichtet.

Das Bodenteil 50 ist, wie aus der Zeichnung ersichtlich kegelstumpfförmig und liegt unter geringem Spiel unter der unteren Stirnfläche eines insgesamt mit 54 bezeichneten Rotors.

Letzterer hat eine kegelstumpfrinnenförmige untere Rotorwand 56, die mit Pumpflügeln 58 besetzt ist. Eine konturierte Umfangswand 60 des Rotors 54 ist über drei in Umfangsrichtung verteilte Flügel 62 mit einem Nabenabschnitt 64 des Rotors 54 verbunden. In den Nabenabschnitt 64 ist eine Antriebswelle 66 der Flüssigkeits-Abscheideeinheit 20 eingespritzt.

Der obere Gehäuseabschnitt 40 trägt über eine transversale Zwischenwand 68 ein Dichtteil 70, welches von oben unter Spiel in das obere Ende der Umfangswand 60 hineingeführt ist. Ein radialer Flansch 72, der am oberen Ende der Außenseite der Umfangswand 60 vorgesehen ist, trägt kleine Dichtflügel 73. Die vorgenannten Teile bilden eine dynamische Dichtung am oberen Ende des Rotors 54.

Eine wendelförmige Leitrippe 74 führt von der dynamischen Dichtung zurückgehaltene Flüssigkeit ins Innere der Flüssigkeits-Abscheideineit 20 zurück.

Das über den Einlaßstutzen 12 angesaugte Gemisch wird tangential auf die Innenfläche der Umfangswand 60 aufgeführt und gelangt auf einem wendelförmigen Weg nach unten in den Arbeitsbereich der Pumpflügel 58.

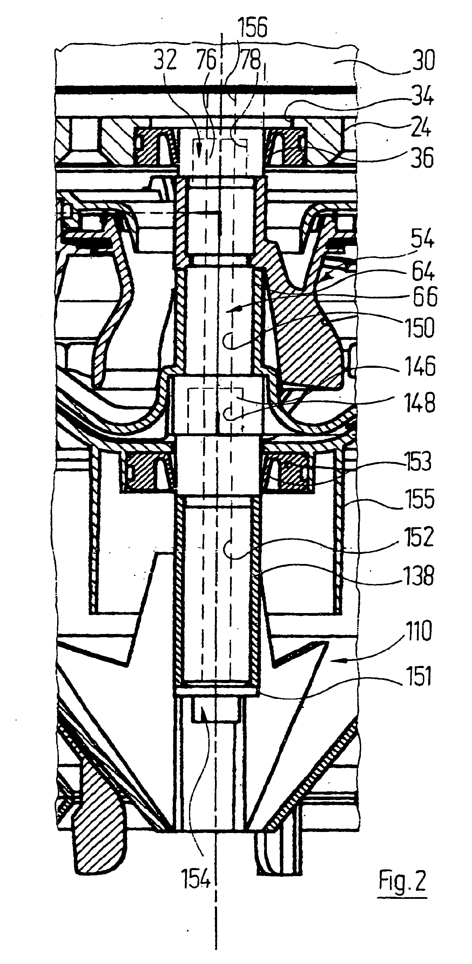

Die Antriebswelle 66 hat (vgl. Figur 2) am oberen Ende einen Antriebsvierkant 76, der mit einer entsprechenden Vierkant-Ausnehmung 78 im Ende der Motorwelle 32 zusammenarbeitet.

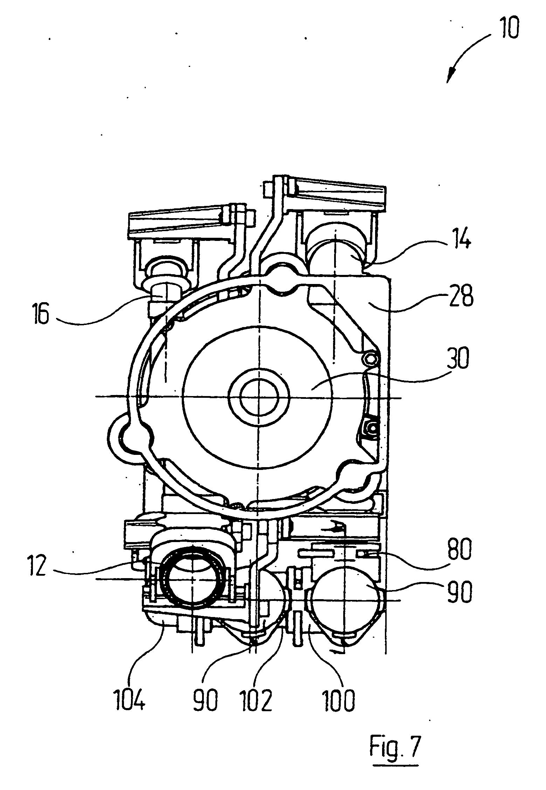

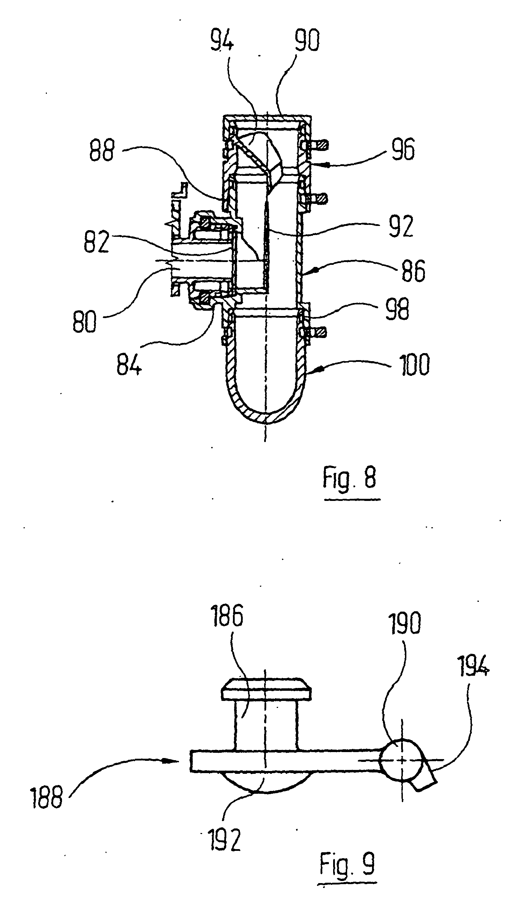

Die Flüssigkeits-Abscheideeinheit 20 arbeitet folgendermaßen: Bei laufendem Antriebsmotor 30 wird dem angesaugten Gemisch durch die Pumpflügel 58 ein Drall gegeben. Durch Zentrifugalwirkung werden die flüssigen Anteile des Gemisches nach außen bewegt und durch die Pumpflügel 58 in einen Flüssigkeits-Auslaßstutzen 80 (Fig. 7 und 8) der Flüssigkeitsabscheideeinheit 20 gedrückt.

Die leichten Luftanteile gelangen über den unteren Rand der Umfangswand 60 in den durch diese begrenzten Raum und werden dort durch die Flügel 62 nochmals stark in Drehung versetzt, so daß restliche Flüssigkeitsanteile zuverlässig abgetrennt werden. Diese fließen auf der Innenseite der Umfangswand 60 nach unten und werden dann von den Pumpflügel 58 übernommen und in den Flüssigkeits-Auslaßstutzen 80 gedrückt.

Letzterer ist in Figur 8 näher gezeigt. Man erkennt, daß die Endfläche des Flüssigkeits-Auslaßstutzen 80 zugleich einen Ventilsitz für einen Flatterventilkörper 82 darstellt, der zwischen dem Flüssigkeits-Auslaßstutzen 80 und einem ersten Einlaßstutzen 84 eines Verzweigungsstückes 86 eingespannt ist.

Das Verzweigungsstück 86 hat einen zweiten Einlaßstutzen 88, der in Figur 7 durch eine Kappe 90 verschlossen wiedergegeben ist, unter Einsatzbedingungen aber mit dem Auslaß eines Speibeckens verbunden sein kann.

Um den Flatterventilkörper 82 in die Schließstellung vorzuspannen, ist in Figur 8 rechts des Flatterventilkörpers 82 ein Syphon 92 vorgesehen, der unter Betriebsbedingungen ein Wasservolumen hält, welches den Flatterventilkörper 82 von rechts beaufschlagt. Unter Arbeitsbedingungen ist der Flatterventilkörper 82 darüber hinaus von dem im Inneren der Flüssigkeits-Abscheideeinheit 20 herrschenden Vakuum beaufschlagt. Nur dann, wenn sich im unteren Abschnitt der Flüssigkeits-Abscheideinheit ein größeres Volumen abgeschiedener Flüssigkeit angesammelt hat, können die Pumpflügel 58 den Flatterventilkörper 82 unter kurzfristiger Überwindung des Druckunterschiedes in die Offenstellung bewegen, so daß eine Portion abgeschiedener Flüssigkeit in das Verzweigungsstück 86 eintritt.

Um zu verhindern, daß vom Speibecken zugeführte Flüssigkeit in den Syphon 92 gelangt, ist über diesem eine Leitwand 94 angeordnet, welche die Syphonwand transversal übergreift, von dieser aber axial beabstandet ist.

Die Leitwand 94 ist an ein Zwischenteil 96 angeformt, welches auf den zweiten Einlaßstutzen 88 aufgesetzt ist.

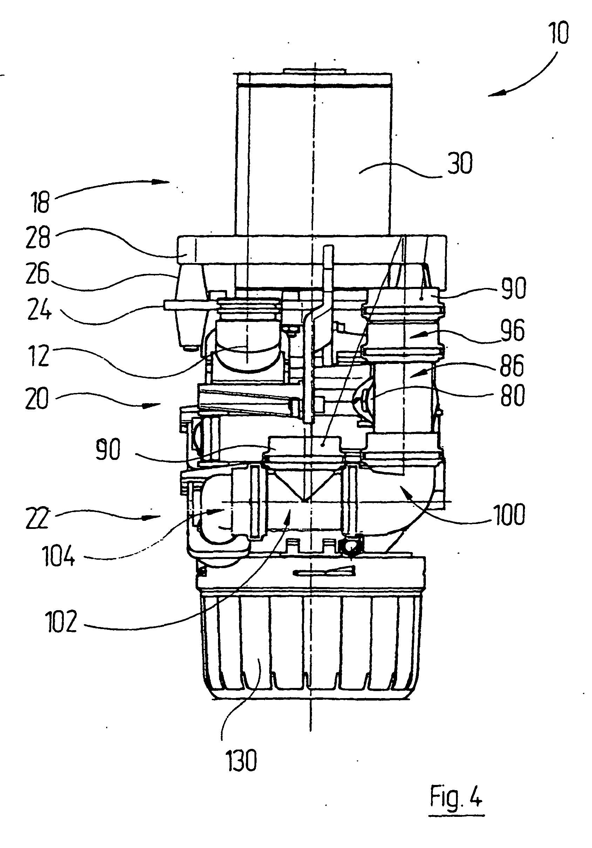

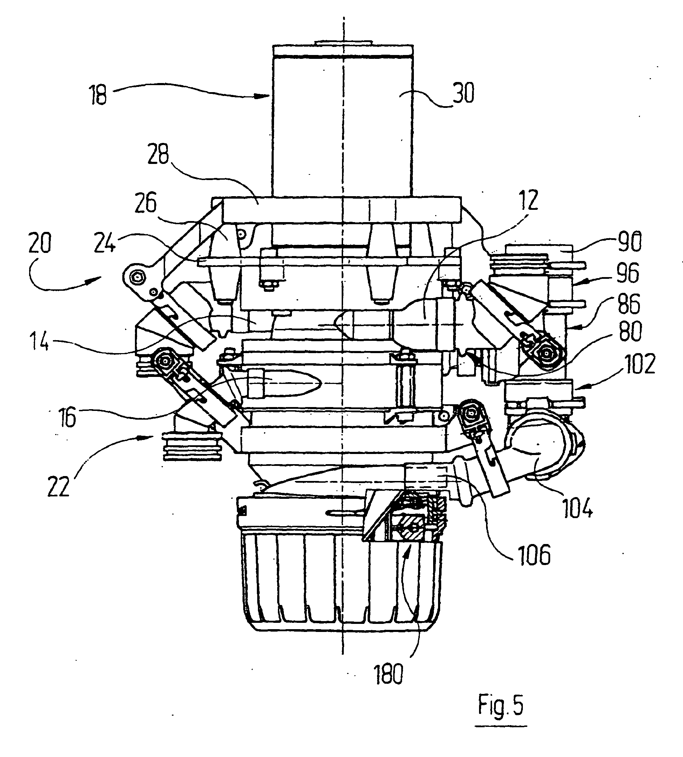

Ein Auslaßstutzen 98 des Verzweigungsstückes 86 ist mit einem Krümmer 100 verbunden, der über ein weiteres T-Stück 102 (Figur 4) und einen weiteren Krümmer 104 zu einem Einlaßstutzen 106 der Festkörper-Abscheideeinheit führt, der insbesondere aus Figur 5 gut ersichtlich ist.

Der nach oben weisende Anschlußstutzen des T-Stückes 102 bietet eine weitere Möglichkeit, eine Abwasser-Quelle anzuschließen, ggf. eine alternative Möglichkeit zum Verzweigungsstück 86 für den Anschluß des Speibeckens. Beim hier betrachteten Ausführungsbeispiel ist der obere Anschlußstutzen des T-Stückes 102 durch eine Kappe 90 verschlossen.

Die Festkörper-Abscheideeinheit 22 hat ein Gehäuse 108, welches einen insgesamt mit 110 bezeichneten Rotor 110 umgibt, der als Zentrifugentrommel ausgebildet ist.

Ein oberer zylindrischer Endabschnitt des Gehäuses 108 ist durch einen O-Ring 112 abgedichtet in eine zylindrische Verbindungswand 114 eingesetzt, die an das Bodenteil 50 der Flüssigkeits-Abscheideinheit 20 angeformt ist.

Eine untere Verbindungswand 116 des Gehäuses 108 ist über eine transversale Zwischenwand 118 an einen kegelförmigen Wandabschnitt 120 des Gehäuses 108 angeformt. Die Verbindungswand 116 trägt zwei O-Ringe 122, 124, über die eine Abdichtung zu einem Haltering 126 bzw. einem oberen Rand 128 eines Festkörper-Sammelbehälters 130 erfolgt. Letzterer ist über einen Bajonettverschluß auf die Verbindungswand 116 aufgesetzt, der hier nicht genauer beschrieben zu werden braucht.

Der kegelförmige Wandabschnitt 120 des Gehäuses 108 trägt in Umfangsrichtung verteilt drei Beruhigungsflügel 132, welche nach unten in den Sammelbehälter 130 ragen.

Der Rotor 112 hat eine zylindrische Umfangswand 134, in deren oberes Ende ein Sperrflansch 135 eingesetzt ist. An das untere Ende der Umfangswand 134 ist ein kegelstumpfförmiger Wandabschnitt 136 angeformt, der sich bis zu einer Höhe h ins Innere des Sammelbehälters 130 hineinerstreckt.

Der Wandabschnitt 136 ist über vier in Umfangsrichtung verteilte radiale Flügel 137 mit einem Nabenabschnitt 138 verbunden. In letzteren ist eine Antriebswelle 140 eingespritzt, welche an ihrem oberen Ende mit einem Antriebsvierkant 146 (vgl. Fig. 2) versehen ist, der in eine komplementäre Ausnehmung 148 formschlüssig eingreift, die im unteren Ende der Antriebswelle 66 der Flüssigkeitsabscheideeinheit 20 vorgesehen ist.

Die Antriebswellen 66 und 140 haben jeweils eine Durchgangsbohrung 150 bzw. 152, und durch diese fluchtenden Durchgangsbohrungen erstreckt sich eine Befestigungsschraube 154, deren in Figur 2 oberes Ende mit einer Gewindebohrung 156 zusammenarbeitet, die im unteren Ende der Motorwelle 32 vorgesehen ist. Zwischen dem Kopf der Befestigungsschraube 154 und dem unteren Ende des Nabenabschnittes 138 ist eine Unterlagsscheibe 151 vorgesehen. Auf diese Weise sind die beiden Rotoren 54 und 110 der beiden Abscheideeinheiten 20, 22 fest mit der Motorwelle 32 zur gemeinsamen Drehung verbunden.

Das obere Ende der Antriebswelle 140 ist gegen das Bodenteil 50 durch eine Lippendichtung 153 abgedichtet. Um den Zutritt von Spritzwasser zur Lippendichtung 153 zu unterbinden, ist an die Unterseite des Bodenteiles 50 eine zylindrische Spritzwand 155 angeformt, welche in das Innere der Zentrifugentrommel eintaucht.

Die Verbindungswand 114 des Bodenteiles 50 begrenzt zusammen mit der Oberseite des Rotors 110 eine Auslaßkammer 158 der Festkörper-Abscheideeinheit 22, welche mit dem Reinwasser-Auslaßstutzen 16 des Kombiabscheidegerätes 10 in Verbindung steht.

Im Inneren des durch den Sammelbehälter 130 und den unteren Abschnitt 118, 122 des Gehäuses 108 begrenzten Raumes ist ein insgesamt 160 bezeichneter Schwimmer angeordnet. Dieser besteht aus zwei dicht miteinander verschweißten Halbschalen 162, 164 und trägt einen Permanentmagneten 166, der in bezogen auf die Geräteachse radialer Richtung magnetisiert ist. Der Permanentmagnet 166 arbeitet mit drei in unterschiedlicher Höhe angeordneten Magnetfeldsensoren 168, 170 und 172 zusammen, welche durch Read-Schalter oder Hall-Sensoren gebildet sein können.

Der Schwimmer 160 ist axial beweglich von den Außenkanten der Beruhigungsflügel 132 getragen, wozu diese mit einer Randausnehmung 174 versehen sind. Auf diese Weise ist der Schwimmer 160 beweglich aber unverlierbar gelagert.

Wie aus der Zeichnung ersichtlich, mündet der Einlaßstutzen 106 tangential in den Raum, der durch den unteren Abschnitt des Gehäuses 108 und den Sammelbehälter 130 begrenzt ist. Die zugeführte Flüssigkeit kreist somit auf der Innenfläche der diesen Raum umschließenden Umfangswand nach unten, vorbei am Schwimmer 160.

Die oben beschriebene Festkörper-Abscheideeinheit 22 arbeitet folgendermaßen:

Festkörperpartikel enthaltendes Abwasser, welches entweder von der Flüssigkeits-Abscheideeinheit 20 oder vom Speibecken des Arbeitsplatzes her dem Verzweigungsstück 86 zugeführt wird, strömt über den Einlaßstutzen 106 ins Innere des Gehäuses 108 und in den Sammelbehälter 130.

Für die Zwecke der Beschreibung sei angenommen, daß sich im Sammelbehälter 130 zunächst noch wenig Feststoffpartikel befinden. Der Schwimmer 160 schwimmt dann beim Einschalten des Gerätes auf dem klaren Überstand, der sich im Sammelbehälter 130 über dem Sediment gebildet hat.

Fließt nun weiteres zu reinigendes Wasser über den Einlaßstutzen 106 zu, so steigt der Schwimmer 160 an. Erreicht das Feld des Permanentmagneten 166 den obersten Magentfeldsensor 172, so gibt dieser ein entsprechendes Signal an eine Steuereinheit 176 ab. Diese setzt daraufhin den Antriebsmotor 30 in Gang. Der Rotor 110 wird so auf hohe Drehzahl (typischerweise 2 500 bis 10 000 U/min) beschleunigt, und der kegelförmige Wandabschnitt 136 des Rotors 110 saugt nun Wasser aus dem oberen Abschnitt des Sammelbehälters 130 ab, bis der Wasserpegel den unteren Rand des Wandabschnittes 136 erreicht hat.

Jeweils wenn eine weitere Wassermenge über den Einlaßstutzen 106 zugeführt wird, wird das entsprechende Wasservolumen in der oben beschriebenen Weise in den Rotor 110 angesaugt. Unter dem Sperrflansch 135 baut sich ein entsprechender Wasserring auf und über dessen Volumen hinaus zugeführtes Wasser wird über den inneren Rand des Sperrflansches 135 in den Auslaßraum 158 der Festkörper-Abscheideeinheit 22 gedrückt und kommt von dort in den Reinwasser-Auslaßstutzen 16. Diesem kann ein Rückschlagventil in Form eines Flatterventiles nachgeschaltet sein, um ein Rücklaufen von Wasser aus der Hausinstallation zu verhindern. Unter Öffnung dieses Rückschlagventiles gelangt das gereinigte Wasser in die Hausinstallation.

Im laufenden Betrieb wird der Antriebsmotor 30 auf einem alternativen Wege ein- und ausgeschaltet. Hierzu ist ein Schalter 178 vorgesehen, der in der Saugkanülenablage des Arbeitsplatzes angeordnet ist und mit der Saugkanüle zusammenarbeitet. Wird die Saugkanüle von der Ablage abgenommen, wird der Schalter 178 geschlossen und der Antriebsmotor 30 wird durch die mit dem Schalter 178 verbundene Steuereinheit 176 erregt.

Das aus dem Mund abgesaugte Gemisch aus Luft/Flüssigkeit/Feststoffpartikeln gelangt zunächst in die Flüssigkeits-Abscheideinheit 20, wo Flüssigkeit und Feststoffpartikel aus der Luft abgeschieden werden. Die Luft verläßt die Flüssigkeits-Abscheideeinheit 20 über den Auslaßstutzen 14, der Feststoffpartikel enthaltende flüssige Anteil des Gemisches wird über den Auslaßstutzen 80 und das Verzweigungsstück 86 dem Einlaßstutzen 106 der Festkörper-Abscheideeinheit zugeführt.

Auf diese Weise werden die Festkörperpartikel von den flüssigen Anteilen getrennt, die, wie oben beschrieben, dem Flüssigkeits-Auslaßstutzen 16 zugeführt werden.

Wird die Saugkanüle auf die Ablage zurückgelegt, so wird der Antriebsmotor 30 angehalten. Nach Wegfall der Zentrifugalkraft fließt der in der Zentrifugentrommel zurückgehaltene Schlamm unter Schwerkrafteinwirkung durch die Öffnung im kegelförmigen Wandabschnitt 136 nach unten in den Sedimentierbehälter 130, wo der Pegel entsprechend ansteigt. Die schweren Feststoffpartikel setzen sich im Sammelbehälter 130 ab. Beim Wiederabnehmen der Saugkanüle von der Ablage wiederholt sich der oben beschriebene Zyklus.

Bei den aufeinanderfolgenden Zyklen wird nun über dem Boden des Sammelbehälters 130 ein wachsendes Sedimentvolumen aufgebaut. Nach längerem Gebrauch ist der Sedimentpegel so hoch angestiegen, daß der Schwimmer 160 beim Einschalten des Gerätes nicht mehr voll absinken kann, vielmehr vorher auf der Sedimentoberfläche aufruht. Ist diese sedimentbedingte untere Ruhelage des Schwimmers 160 so hoch, daß der Permanentmagent 166 nun in Höhe des Magnetfeldsensors 168 liegt (dieses ist so gewählt, daß sie einer 95%igen Füllung des Sammelbehälters 130 entspricht), so gibt der Magnetfeldsensor 168 ein entsprechendes Signal an die Steuereinheit 176 ab. Letztere schaltet dann einen visuellen und/oder akustischen Alarm, der den Benutzer darauf aufmerksam macht, daß der Sammelbehälter 130 in nächster Zeit gegen einen leeren Sammelbehälter getauscht werden muß.

Ist der Sedimentpegel im Sammelbehälter 130 weiter angewachsen, wird durch den Permanentmagneten 166 schließlich der Magnetfeldsensor 170 betätigt. Dieser entspricht dem maximal zulässigen Sedimentpegel im Sammelbehälter 130. Die Steuereinheit 176 kann nun einen schärfen visuellen und/oder akustischen Alarm erzeugen oder, falls gewünscht, auch einen Nothalt des Abscheidegerätes herbeiführen.

Man erkennt, daß die obige Einheit das am dentalen Arbeitsplatz anfallende Gemisch aus Luft/Wasser/Feststoffpartikeln in seine Bestandteile zerlegt und einerseits die Saugmaschine vor flüssigen Anteilen, andererseits das Kanalnetz vor giftigen Feststoffanteilen schützt.

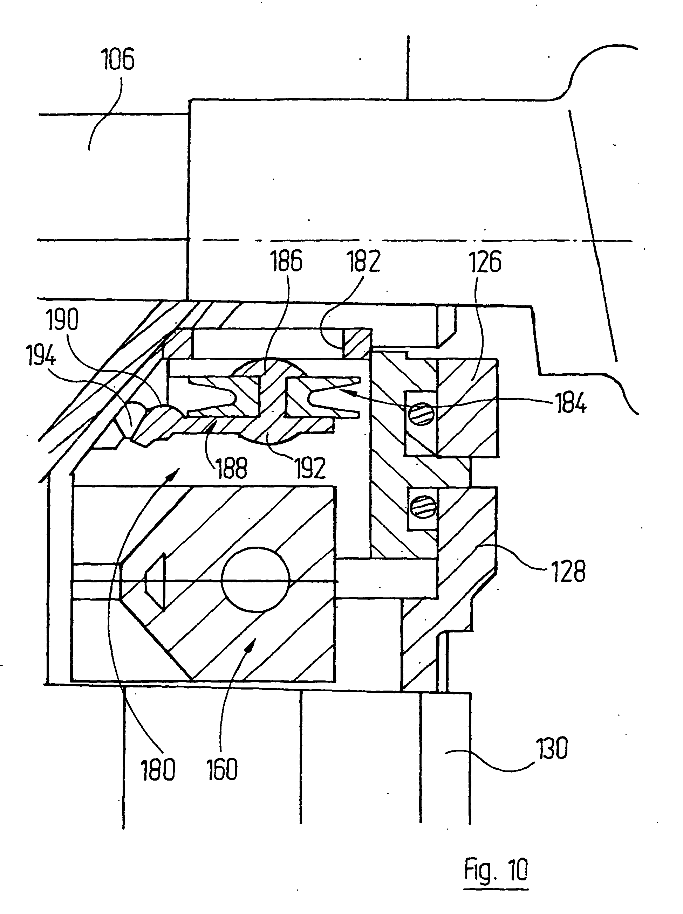

Um die oben beschriebenen Pegeländerungen im Inneren des durch den Sammelbehälter 130 begrenzten Raumes zu ermöglichen, ist es notwendig, diesen zu entlüften. Hierzu ist eine in Figur 4 insgesamt mit 180 bezeichnete Entlüftungseinrichtung vorgesehen, die in Figur 10 näher gezeigt ist.

Die Entlüftungseinrichtung 180 umfaßt eine Entlüftungsöffnung 182, die in dem horizontalen Wandabschnitt 118 des Gehäuses 108 vorgesehen ist. Die Entlüftungsöffnung 184 ist durch einen Ventilkörper 182 verschließbar, der als Doppellippenring gezeigt ist. Der Ventilkörper 184 ist auf einen Haltestab 186 aufgeknöpft, der von einem Stellhebel 188 getragen ist. Letzterer hat eine zylindrische Lagerrippe 190, die in einer komplementären Lagermulde 192 des Gehäuses drehbar gelagert ist.

Auf der Unterseite des Stellhebels 188 ist ein gewölbter Kontaktkopf 192 vorgesehen, der in der Bahn des Schwimmers 160 liegt. Ein Anschlagarm 194 des Stellhebels 188 gibt im Zusammenwirken mit einer benachbarten Gehäusefläche eine untere horizontale Endlage des Ventilkörpers 184 vor, die in der Zeichnung wiedergegeben ist.

Wird das Innere des Sammelbehälters 130 mit Wasser beaufschlagt und läuft der Antriebsmotor 30 nicht an (z.B. wegen Netzausfalls), so kommt der weiter steigende Schwimmer 160 in Anlage an den Kontaktkopf 192 und drückt den Ventilkörper 184 in eine die Entlüftungsöffnung 182 überdeckende Schließstellung. Nun kann keine Luft aus dem Inneren des Gerätes mehr abströmen und damit zwangsläufig kein Wasser mehr in die Festkörper-Abscheideeinheit 22 eintreten.

Für manche Anwendungsfälle ist es nicht notwendig, daß ein Abscheidegerät sowohl eine Flüssigkeits-Abscheideeinheit als auch eine Festkörper-Abscheideeinheit umfaßt. Beispiele sind Installationen, bei denen schon ein Zyklon als Flüssigkeitsabscheider vorhanden ist und nur noch zusätzlich eine Festkörper-Abscheidung gewünscht wird. Umgekehrt kann an einem Arbeitsplatz schon ein Festkörper-Abscheider vorgesehen sein, und es wird nur gewünscht, den schon vorhandenen Zyklon-Flüssigkeitsabscheider durch einen motorgetriebenen Flüssigkeitsabscheider zu ersetzen.

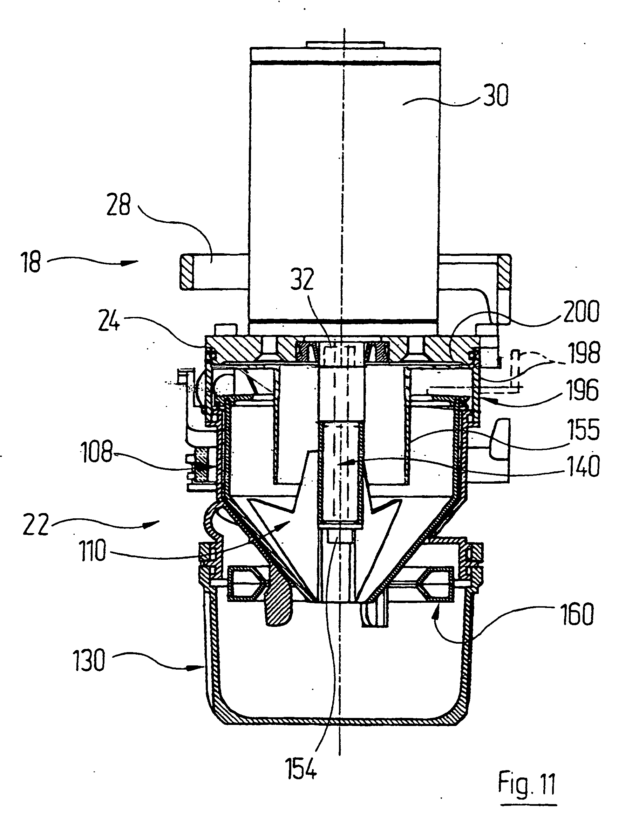

Um derartige Abscheidegeräte unter Verwendung der gleichen Baugruppen herstellen zu können, wie sie oben beschrieben wurden, kann man gemäß Figur 11 die Festkörper-Abscheideeinheit 22 auch direkt an der Antriebseinheit 18 anbringen. Auf das Gehäuse 108 der Festkörper-Abscheideeinheit 22 ist nun anstelle des Bodenteiles 50 der Flüssigkeits-Abscheideeinheit 20 ein Adapterteil 196 aufgesetzt, welches gleichen Durchmesser aufweist wie der obere Gehäuseabschnitt 40 des Gehäuseteiles 38. Beim hier betrachteten Ausführungsbeispiel hatten der obere Gehäuseabschnitt 42 und der untere Gehäuseabschnitt 48 des Gehäuseteiles 38 gleichen Durchmesser, so daß das Adapterteil 196 eine rein zylindrische Umfangswand 198 hat.

An die Umfangswand 198 ist eine transversale Zwischenwand 200 an solcher axialer Stelle angeformt, daß sie über der Unterseite der Tragplatte 24 liegt. Die Zwischenwand 200 trägt das Schutzrohr 155.

Die übrigen in Figur 11 dargestellten Bauteile sind weiter oben schon beim ersten Ausführungsbeispiel beschrieben und brauchen hier nicht nochmals im einzelnen detailliert beschrieben zu werden. Es versteht sich, daß die Befestigungsschraube 154 entsprechend dem Wegfall des Rotors 54 gekürzt ist.

Bei einem abgewandelten nicht gezeigten Abscheidegerät, bei dem die Flüssigkeits-Abscheideeinheit 20 größeren Durchmesser hat, kann man ein in der Umfangswand 198 abgestuftes den Durchmesserunterschied kompensierendes Adapterteil 196 verwenden, wie es in Figur 11 gestrichelt angedeutet ist.

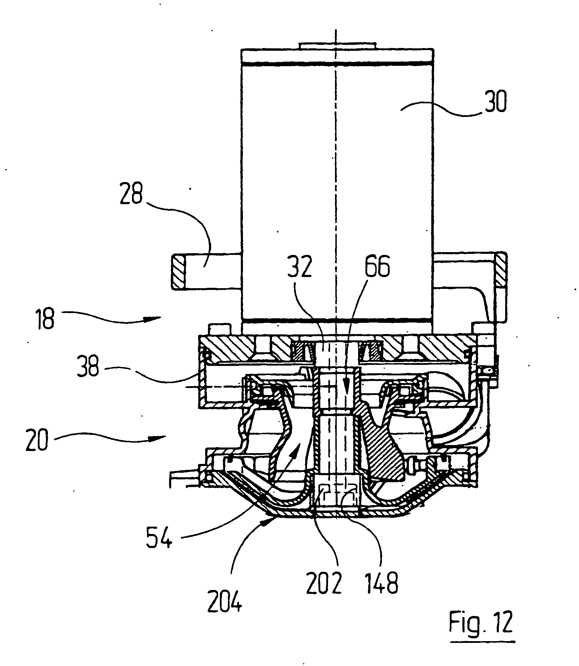

Das Abscheidegerät nach Figur 12 ist ein reiner Flüssigkeitsabscheider. Die Flüssigkeits-Abscheideeinheit 20 ist auf die Unterseite der Tragplatte 24 aufgesetzt, wie unten beschrieben.

In die untenliegende Formschluß-Ausnehmung 148 der Antriebswelle 86 ist ein Füllteil 202 eingesetzt, welches die Ausnehmung 148 mit Ausnahme einer Durchgangsbohrung und einer Ausnehmung für den Kopf einer Befestigungsschraube ausfüllt. Die Befestigungsschraube 154 ist nun gemäß der Länge der Antriebswelle 66 gewählt.

Das Bodenteil 50 ist durch ein Bodenteil 204 ersetzt, welches mittig unten geschlossen ist, im übrigen aber gleiche Geometrie aufweist wie das Bodenteil 50.

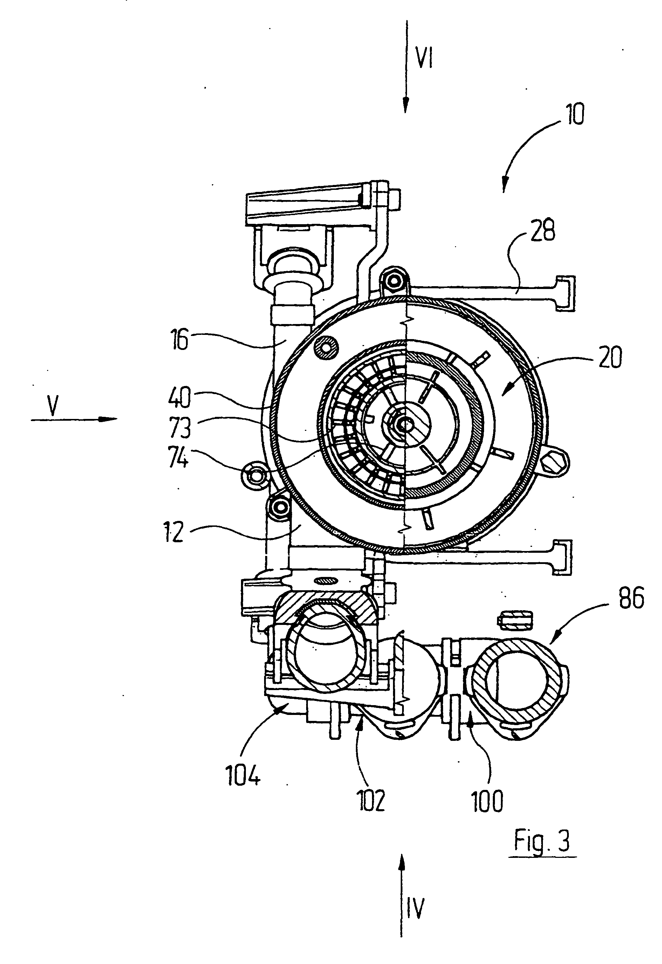

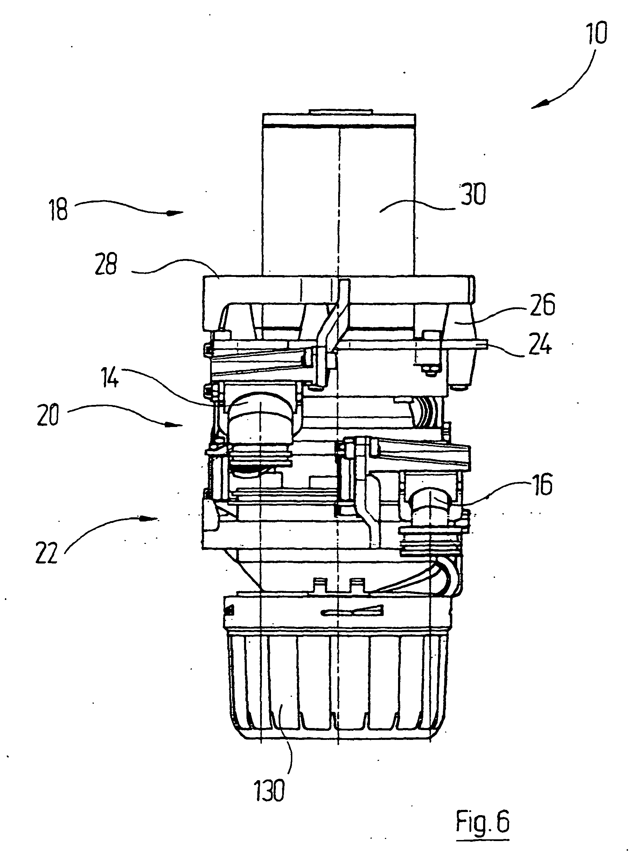

Aus der oben stehenden Beschreibung ist gut ersichtlich, daß man mit Ausnahme von zwei gerätespezifischen Spritzgußteilen, nämlich dem Adapterteil 196 und dem abgewandelten Bodenteil 204 unter Verwendung identischer Bauteile drei verschiedene Abscheidegeräte realisieren kann, nämlich ein kombiniertes Flüssigkeits- und Festkörper-Abscheidegerät (Figuren 1 bis 9), ein Festkörper-Abscheidegerät (Figur 11) und ein Flüssigkeits-Abscheidegerät (Figur 12) .

## Patentansprüche

1. Baukastensystem eines Abscheidegeräts, umfassend einen Antriebsmotor (30), eine Tragplatte (24) für den Antriebsmotor (30), eine einen Rotor umfassenden Flüssigkeits-Abscheideeinheit (20) und eine einen Rotor umfassenden Festkörper-Abscheideeinheit (22), wobei die Tragplatte (24) für den Antriebsmotor (30) eine solche Anschlußgeometrie aufweist, daß direkt sowohl eine Endwand der Flüssigkeits-Abscheideeinheit (20) als auch eine Endwand der Festkörper-Abscheideeinheit (22) auf sie aufsetzbar ist.

2. Baukastensystem eines Abscheidegeräts, umfassend einen Antriebsmotor (30) eine Tragplatte (24) für den Antriebsmotor (30), ein Adapterteil (196), eine einen Rotor umfassenden Flüssigkeits-Abscheideeinheit (20) und eine einen Rotor umfassenden, Festkörper-Abscheideeinheit (22), wobei die Tragplatte (24) für den Antriebsmotor (30) eine solche Anschlußgeometrie aufweist, daß unter Zwischenschaltung des Adapterteiles (196) sowohl eine Endwand der Flüssigkeits-Abscheideeinheit (20) als auch eine Endwand der Festkörper-Abscheideeinheit (22) auf sie aufsetzbar ist.

3. Baukastensystem nach Anspruch 1 oder 2, **dadurch gekennzeichnet, daß** eine zweite Endwand der Flüssigkeits-Abscheideeinheit (20) solche Anschlußgeometrie aufweist, daß eine Endwand einer Festkörper-Abscheideeinheit (22) auf sie aufsetzbar ist.

4. Baukastensystem nach Anspruch 2 oder 3, **dadurch gekennzeichnet, daß** das Adapterteil (196) im wesentlichen hülsenförmig ist.

5. Baukastensystem nach Anspruch 4, **dadurch gekennzeichnet, daß** das hülsenförmige Adapterteil Endabschnitte unterschiedlichen Durchmessers aufweist.

6. Baukastensystem nach einem der Anspruche 2 bis 5, **dadurch gekennzeichnet, daß** die Tragplatte (24) einen in Umfangsrichtung verlaufenden Absatz (42) aufweist, auf den eine Umfangswand (40) eines Gehäuseteiles (38) der Flüssigkeits-Abscheideeinheit (20), der Festkörper-Abscheideeimheit (22) oder des Adapterteiles (196) dicht aufgeschoben ist.

7. Baukastensystem nach einem der Ansprüche 1 bis 6, **gekennzeichnet durch** ein Bodenteil (204) für eine Flüssigkeits-Abscheideeinheit (20), welches im wesentlichen gleiche Geometrie aufweist wie ein Deckelteil (50) einer Festkörper-Abscheideeinheit (22), jedoch geschlossen ist.

8. Baukastensystem nach einem der Ansprüche 1 bis 7, **dadurch gekennzeichnet, daß** eine Antriebswelle (66) für den Rotor (54) der Flüssigkeits-Abscheideeinheit (20) und eine Antriebswelle (140) für den Rotor (110) der Festkörper-Abscheideeinheit (22) am einen Ende identische Formschlußmittel (76; 146) aufweisen, die zu Formschlußmitteln (78) im freien Ende der Welle (32) des Antriebsmotors (30) komplementär sind.

9. Baukastensystem nach Anspruch 8, **dadurch** gekeaanzeichnet, daß ein zweites Ende der Antriebswelle (66) der Flüssigkeitsabscheideeinheit (20) Formashlußmittel (148) aufweist, die zu dem Formschlußmittel (78) der Motorwelle (32) identisch sind.

10. Baukastensystem nach Anspruch 8 oder 9, **dadurch gekennzeichnet, daß** die Antriebswellen (66; 140) für die Rotoren (54; 110) der Flüssigkeitsahscheideeinheit (20) und der Festkörper-Abscheideeinheit (22) jeweils eine Durchgangsbohrung (150; 152) für ein Befestigungsmittel (154) aufweisen, das am Ende der Motorwelle (30) angreift.

11. Baukastensystem nach einem der Ansprüche 8 bis 10 , **dadurch gekennzeichnet, daß** mindestens eine Antriebswelle (66; 140) der Abscheideeinheiten (20; 22) in den Rotor (54; 110) der zugehörigen Abscheideeinheit (20; 22) eingespritzt ist.

12. Baukastensystem nach einem der Ansprüche 8 bis 11, **gekennzeichnet, durch** ein Füllstück (202) für das freie Ende der Antriebswelle (66) der Flüssigkeits-Abscheideeinheit (20), welches dieses Wellenende zu voller Wellensymmetrie ergänzt und eine axiale Durchgangsbohrung für ein Befestigungsmittel (154) und ggf. eine-Ausnehmung für einen Kopf des Befestigungsmittels (154) aufweist.

## Claims

1. Modular system of a separator apparatus, comprising a drive motor (30), a support plate (24) for the drive motor (30), a liquid separator unit (20) including a rotor and a solid separator unit (22) including a rotor, the support plate (24) for the drive motor (30) having connection geometry such that both an end wall of the liquid separator unit (20) and an end wall of the solid separator unit (22) can be mounted directly thereon.

2. Modular system of a separator apparatus, comprising a drive motor (30), a support plate (24) for the drive motor (30), an adapter part (196), a liquid separator unit (20) including a rotor and a solid separator unit (22) including a rotor, the support plate (24) for the drive motor (30) having connection geometry such that both an end wall of the liquid separator unit (20) and an end wall of the solid separator unit (22) can be mounted thereon, the adapter part (196) being interposed.

3. Modular system according to claim 1 or 2, **characterised in that** a second end wall of the liquid separator unit (20) has connection geometry such that an end wall of a solid separator unit (22) can be mounted thereon.

4. Modular system according to claim 2 or 3, **characterised in that** the adapter part (196) has a substantially sleeve-like configuration.

5. Modular system according to claim 4, **characterised in that** the sleeve-like adapter part has end sections of different diameters.

6. Modular system according to any one of claims 2 to 5, **characterised in that** the support plate (24) includes a shoulder (42) disposed in the circumferential direction thereof, on to which a peripheral wall (42) of a housing part (38) of the liquid separator unit (20), of the solid separator unit (22) or of the adapter part (196) can be press-fitted sealingly.

7. Modular system according to any one of claims 1 to 6, **characterised by** a base part (204) for a liquid separator unit (20) which has substantially the same geometry as a cover part (50) of a solid separator unit (22), but is occluded.

8. Modular system according to any one of claims 1 to 7, **characterised in that** a drive shaft (66) for the rotor (54) of the liquid separator unit (20) and a drive shaft (140) for the rotor (110) of the solid separator unit (22) have on one end identical positive-fit connection means (76; 146) which are complementary to positive-fit connection means (78) disposed in the free end of the shaft (32) of the drive motor (30).

9. Modular system according to claim 8, **characterised in that** a second end of the drive shaft (66) of the liquid separator unit (20) includes positive-fit connection means (148) which are identical to the positive-fit connection means (78) of the motor shaft (32).

10. Modular system according to claim 8 or 9, **characterised in that** the drive shafts (66; 140) for the rotors (54; 110) of the liquid separator unit (20) and the solid separator unit (22) each have a through-bore (150; 152) for a fixing means (154) which engages on the end of the motor shaft (30).

11. Modular system according to any one of claims 8 to 10, **characterised in that** at least one drive shaft (66; 140) of the separator units (20; 22) is integrated by injection moulding into the rotor (54; 110) of the associated separator unit (20; 22).

12. Modular system according to any one of claims 8 to 11, **characterised by** a filler piece (202) for the free end of the drive shaft (66) of the liquid separator unit (20), which filler piece (202) supplements this end of the shaft to provide complete symmetry of the shaft and includes an axial through-bore for a fixing means (154) and, optionally, a recess for a head of the fixing means (154)

## Revendications

1. Système modulaire d'un appareil séparateur comprenant un moteur d'entraînement (30), une plaque support (24) pour le moteur d'entraînement (30), une unité séparatrice de liquide (20) comprenant un rotor et une unité séparatrice de solides (22) comprenant un rotor, la plaque support (24) pour le moteur d'entraînement (30) présentant une géométrie de raccordement telle qu'il est possible de poser directement sur elle aussi bien une paroi terminale de l'unité séparatrice de liquide (20) qu'une paroi terminale de l'unité séparatrice de solides (22).

2. Système modulaire d'un appareil séparateur comprenant un moteur d'entraînement (30), une plaque support (24) pour le moteur d'entraînement (30) une pièce adaptatrice (196), une unité séparatrice de liquide (20) comprenant un rotor et une unité séparatrice de solides (22) comprenant un rotor, la plaque support (24) pour le moteur d'entraînement (30) présentant une géométrie de raccordement telle qu'il est possible de poser sur elle, en intercalant la pièce adaptatrice (196), aussi bien une paroi terminale de l'unité séparatrice de liquide (20) qu'une paroi terminale de l'unité séparatrice de solides (22).

3. Système modulaire selon la revendication 1 ou 2, **caractérisé par le fait qu'**une deuxième paroi terminale de l'unité séparatrice de liquide (20) présente une géométrie de raccordement telle qu'une paroi terminale de l'unité séparatrice de solides (22) peut être posée sur elle.

4. Système modulaire selon la revendication 2 ou 3, **caractérisé par le fait que** la pièce adaptatrice (196) est essentiellement en forme de manchon.

5. Système modulaire selon la revendication 4, **caractérisé par le fait que** la pièce adaptatrice en forme de manchon présente des sections terminales de diamètre différent.

6. Système modulaire selon l'une des revendications 2 à 5, **caractérisé par le fait que** la plaque support (24) présente un épaulement (42) s'étendant en direction circonférentielle sur lequel une paroi périphérique (42) d'une pièce de boîtier (38) de l'unité séparatrice de liquide (20), de l'unité séparatrice de solides (22) ou de la pièce adaptatrice (196) est engagée de manière étanche.

7. Système modulaire selon l'une des revendications 1 à 6, **caractérisé par** une pièce de fond (204) pour une unité séparatrice de liquide (20) qui présente une géométrie essentiellement identique à celle d'une pièce de couvercle (50) d'une unité séparatrice de solides (22) mais qui est fermée.

8. Système modulaire selon l'une des revendications 1 à 7, **caractérisé par le fait qu'**un arbre d'entraînement (66) pour le rotor (54) de l'unité séparatrice de liquide (20) et un arbre d'entraînement (140) pour le rotor (110) de l'unité séparatrice de solides (22) présentent à une extrémité des moyens d'emboîtement (76 ; 146) identiques qui sont complémentaires de moyens d'emboîtement (78) dans l'extrémité libre de l'arbre (32) du moteur d'entraînement (30).

9. Système modulaire selon la revendication 8, **caractérisé par le fait qu'**une deuxième extrémité de l'arbre d'entraînement (66) de l'unité séparatrice de liquide (20) présente des moyens d'emboîtement (148) qui sont identiques aux moyens d'emboîtement (78) de l'arbre de moteur (32).

10. Système modulaire selon la revendication 8 ou 9, **caractérisé par le fait que** les arbres d'entraînement (66 ; 140) pour les rotors (54 ; 110) de l'unité séparatrice de liquide (20) et de l'unité séparatrice de solides (22) présentent chacun un trou de passage (150 ; 152) pour un moyen de fixation (154) qui agit sur l'extrémité de l'arbre de moteur (30).

11. Système modulaire selon l'une des revendications 8 à 10, **caractérisé par le fait qu'**au moins un arbre d'entraînement (66 ; 140) des unités séparatrices (20 ; 22) est injecté dans le rotor (54 ; 110) de l'unité séparatrice (20 ; 22) associée.

12. Système modulaire selon l'une des revendications 8 à 11, **caractérisé par** une pièce de remplissage (202) pour l'extrémité libre de l'arbre d'entraînement (66) de l'unité séparatrice de liquide (20), laquelle complète cette extrémité d'arbre en vue d'une symétrie d'arbre totale et présente un trou de passage pour un moyen de fixation (154) et le cas échéant un évidement pour une tête du moyen de fixation (154).
